Europäisches Patentamt

European Patent Office

Office européen des brevets

(11) Veröffentlichungsnummer: **0 077 882**
**A1**

## (12) EUROPÄISCHE PATENTANMELDUNG

(21) Anmeldenummer: **82106724.6**

(22) Anmeldetag: **24.07.82**

(51) Int. Cl.³: **F 16 B 5/01**
**E 04 C 2/54**

(30) Priorität: **23.10.81 DE 8130989 U**

(43) Veröffentlichungstag der Anmeldung:
**04.05.83 Patentblatt 83/18**

(84) Benannte Vertragsstaaten:
**AT CH DE FR LI NL SE**

(71) Anmelder: **Röhm GmbH**
**Kirschenallee Postfach 4242**
**D-6100 Darmstadt 1(DE)**

(72) Erfinder: **Hanstein, Friedrich**
**Darmstädter Strasse 66**
**D-6112 Gross-Zimmern(DE)**

(72) Erfinder: **Kerk, Klaus**
**Bessunger Strasse 10a**
**D-6103 Griesheim(DE)**

(54) **Befestigungselemente für Kunststoff-Hohlkammerplatten.**

(57) Die Neuerung betrifft mit Befestigungselementen ausgerüstete Kunststoff-Hohlkammerplatten, bestehend aus zwei dünnwandigen, parallelen Außenwänden und senkrecht dazu angeordneten Zwischenwänden welche die Hohlkammern bilden, wobei in die Hohlkammern Kunststoffstäbe mit einem, dem Hohlkammerquerschnitt angepaßten, aber die Bewegung innerhalb der Hohlkammern noch erlaubenden Querschnitt eingepaßt sind.

EP 0 077 882 A1

Befestigungselemente für Kunststoff-Hohlkammerplatten

Hohlkammerplatten aus Kunststoff, die aus zwei in der Regel dünnwandigen parallelen Außenwänden und einer Vielzahl von dazu senkrecht angeordneten, parallelen Zwischenwänden aufgebaut sind, die gegebenenfalls auch eine zu den Außenwänden parallele Zwischenwand besitzen können, haben sich als leichte, wärmedämmende Bauelemente bewährt. In ihrer lichtdurchlässigen Form dienen sie z.B. als Verglasungselemente von Gewächshäusern und in Industriebauten. Bevorzugte Materialien sind z.B. Methylmethacrylat und Polycarbonat. Wo es auf Schlagfestigkeit besonders ankommt, empfiehlt sich die Ausführung aus Polycarbonat. Während sich die Platten als Ganzes wegen ihrer Hohlkammerstruktur durch hohe Belastbarkeit auszeichnen, sind die verhältnismäßig dünnen Außen- und Zwischenwände bei punktförmiger Belastung bruchempfindlich.

Eng lokalisierte Belastungen können z.B. an den Befestigungsstellen der Hohlkammerplatten auftreten. Die vorherrschende Tendenz geht bei den Anwendern dahin, die Kunststoff-Hohlkammerplatten punktweise auf der Unterkonstruktion zu befestigen. Dabei bietet sich an, die Hohlkammerplatten mit entsprechenden Bohrungen, vorwiegend in Randnähe, zu versehen und sie dann mit

-2-

den üblichen Mitteln, wie Schrauben, Nieten oder gegebenenfalls auch Nägeln auf der Unterkonstruktion zu befestigen. Diese Art der Befestigung ist auch bei Polycarbonat-Hohlkammerplatten den auftretenden Belastungen durch Schnee, Winddruck, Sog usw. nicht immer gewachsen. Es kommt zur Rißbildung und zum Ausreißen im Bereich der Bohrlöcher. Darüber hinaus stellen die Bohrlöcher in der bisher angewendeten Form potentielle Eintrittsöffnungen für Wasser, Staub und sonstige Verunreinigungen dar.

Es bestand somit die Aufgabe, die Befestigung von Hohlkammerplatten, insbesondere von Hohlkammerplatten aus Polycarbonat, mittels Bohrungen so zu gestalten, daß ein Ausreißen im Bereich der Bohrungen erschwert bzw. vermieden wird, ohne daß sich der Befestigungsvorgang dadurch wesentlich komplizierter gestaltet.

Es wurde nun gefunden, daß die vorliegende Aufgabe weitgehend gelöst werden kann mittels eines Befestigungselements, bestehend aus mindestens einem Kunststoffstab (2) mit einem, dem Hohlkammerquerschnitt angefaßten, aber die Bewegung innerhalb der Hohlkammern (1) der Hohlkammerplatten noch erlaubenden Querschnitt (3). Der Kunststoffstab (2) kann dabei massiv sein, aber er kann auch Hohlräume bzw. Unterbrechungen aufweisen. Wenn erfindungsgemäß ein massiver Kunststoffstab (2) verwendet wird, so wird seine Länge in der Regel so bemessen sein, daß sie sich über die ganze Länge einer Hohlkammerplatte erstreckt. Entscheidend ist in jedem Fall, daß sich Partien der Kunststoffstäbe (2)

an den Stellen befinden, an denen die Befestigung mit der Unterkonstruktion vorgenommen werden soll.

Besonders günstig ist eine Ausführungsart der erfindungsgemäßen Befestigungselemente, bei der diese aus einer Anzahl, durch dünnere flexible Stangeneinheiten (5) untereinander verbundenen Stababschnitten (Klötzchen) aus Kunststoff (2A) mit einem, dem Hohlkammerquerschnitt angepaßten, aber die Bewegung innerhalb der Hohlkammern (1) erlaubendem Querschnitt (3) bestehen, wobei vorzugsweise die Stangeneinheiten (5) mittig mit der Stirnfläche (4) der Stababschnitte (2A) verbunden sind.

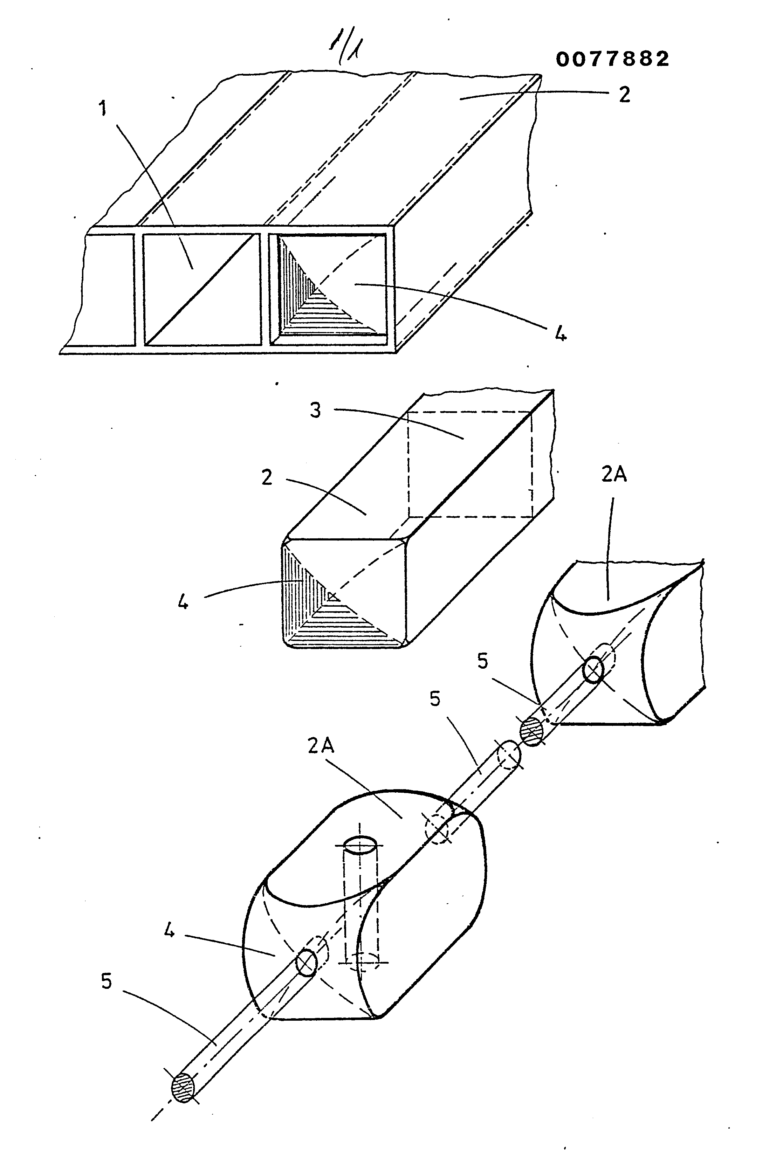

Die Zahlenangaben in Klammern beziehen sich auf die Zeichnung.

Die Stirnflächen (4) der Kunststoffstäbe (2) sind vorzugsweise so ausgebildet, daß der Querschnitt der Stäbe bis zum Scheitel der Stirnfläche abnimmt, so daß sich die Kunststoffstäbe (2) wegen des sich verjüngenden Querschnitts leicht in die Hohlkammern (1) einführen lassen. Die Stababschnitte (Klötzchen) (2A) können mit Vorbohrungen bzw. Löchern, die vorzugsweise senkrecht vom Mittelpunkt einer Seitenfläche aus gesetzt werden, versehen sein.

Vom Material her sind eine Reihe von Kunststoffen zur Herstellung der erfindungsgemäßen Befestigungselemente geeignet, beispielsweise schlagzähe Kunststoffe, wie Hart-PVC, Polycarbonat u.a., vor allem in Form von transparenten Materialien.

Besonders günstig gestaltet sich die Herstellung der erfindungsgemäßen Befestigungselemente, wenn sie einstückig ausgeführt wird, beispielsweise durch Extrudieren und periodisches intermittierendes Ziehen.

Die Stangeneinheiten (5) sollten zweckmäßig eine gewisse Schubsteifigkeit bei vorhandener Elastizität besitzen, weil dadurch die Einführung und Einpassung der Befestigungselemente in die Hohlkammern (1) erleichtert wird. Bevorzugt besitzt der von der Stirnfläche (4) abgedeckte Abschnitt der Kunststoffstäbe (2) annähernd die Gestalt einer Kalotte oder einer Pyramide.

Die Mindestlänge der Befestigungselemente wird durch die Kantenlänge der Hohlkammerplatten bestimmt. Im allgemeinen wird eine Länge von 600 cm zur Verwendung mit den marktgängigen Platten ausreichen.

Hinsichtlich der Länge der Stababschnitte (2A) ist eine materialbedingte Limitierung nur insofern gegeben, als die Stababschnitte nicht zu klein sein sollen, einerseits weil sie die Befestigungsschrauben usw. aufnehmen müssen, andererseits um die auf sie ausgeübte Belastung auf eine der Belastung adäquate Fläche der Hohlkammerplatte zu übertragen. Im allgemeinen haben die Stababschnitte (2A) eine Länge von mindestens 10 mm, vorzugsweise liegen sie bei 10 bis 50, speziell bei ca. 15 mm. Der Abstand zwischen den Stababschnitten (2A), die untereinander durch die Stangeneinheiten (5) verbunden sind, ist innerhalb des vom Zweck her vorgegebenen Rahmens variabel. Als Richtwert können z.B. 150 mm gelten. In der Regel sind die einzelnen Stababschnitte (2A) unter sich identisch und äquidistant, es sind aber auch hier Variationen möglich. Die Höhe der Hohlkammerplatten (1), die für den Querschnitt der Kunststoffstäbe (2) bzw. Stababschnitte (2A) maßgeblich ist,

- 5 -

beträgt in der Regel 4, 5, 6, 8 und 16 cm. Die Breite
der Platten liegt vielfach bei 200 cm. Die flexiblen
Stangeneinheiten (5) können beispielsweise einen runden
Querschnitt besitzen mit einem Durchmesser von ca. 3
bis 15 mm, vorzugsweise ca. 5 bis 15 mm.

Die Anwendung der erfindungsgemäßen Befestigungselemente
gestaltet sich sehr einfach. Das Befestigungselement,
bestehend aus einem Kunststoffstab (2) bzw. den aus einer
Anzahl durch dünnere, flexible Stangeneinheiten (5) untereinander verbundenen Stababschnitten aus Kunststoff (2A)
wird in die vorgesehene Hohlkammer (1) der Hohlkammerplatte, vorzugsweise einer Polycarbonatplatte, eingeführt.
Die Hohlkammerplatte wird an den für die Befestigung vorgesehenen Stellen angebohrt, zweckmäßig in dem man von
unten her die Außenwand anbohrt und in dem Stab bzw. den
Stababschnitten (1) verschraubt. Vorteilhafterweise
können an dieser Stelle selbstschneidende Schrauben verwendet werden.

Damit wird eine einfache punktweise Befestigung der
Hohlkammerplatte auf einer Unterkonstruktion möglich,
ohne daß die Belastbarkeit der Hohlkammerplatten als
Ganzes erheblich beeinträchtigt würde.
Die Belastbarkeit kann im quantitativen Test, beispielsweise durch Zugversuche auf einer Zerreißmaschine, für
die Befestigungsform des Standes der Technik im Vergleich
mit der erfindungsgemäßen Befestigungsform ermittelt werden.
Es erwies sich, daß die erfindungsgemäße Ausführungsform
eine 3 bis 6-fach höhere Belastung aushält, bis Reißen eintritt, als die Ausführungsformen des Standes der Technik.

Befestigungselemente für Kunststoff-Hohlkammerplatten

Schutzansprüche

1. Mit Befestigungselementen ausgerüstete Kunststoff-Hohlkammerplatten, bestehend aus zwei dünnwandigen parallelen Außenwänden und senkrecht dazu angeordneten Zwischenwänden, welche die Hohlkammern bilden,

dadurch gekennzeichnet,

daß in die Hohlkammern (1) Kunststoffstäbe (2) mit einem, dem Hohlkammerquerschnitt angepaßten, aber die Bewegung innerhalb der Hohlkammern (1) noch erlaubenden Querschnitt (3) eingepaßt sind.

2. Mit Befestigungselementen ausgerüstete Kunststoff-Hohlkammerplatten gemäß Anspruch 1, dadurch gekennzeichnet, daß sich der Kunststoffstab (2) über die ganze Länge einer Hohlkammer (1) erstreckt.

3. Mit Befestigungselementen ausgerüstete Kunststoff-Hohlkammerplatten gemäß Anspruch 1, dadurch gekennzeichnet, daß sich die Kunststoffstäbe (2) an den Stellen befinden, an denen die Befestigung mit der Unterkonstruktion vorgenommen werden soll.

0077882

4. Mit Befestigungselementen ausgerüstete Kunststoff-Hohlkammerplatten gemäß den Ansprüchen 1 bis 3, dadurch gekennzeichnet, daß die Stirnfläche (4) der Kunststoffstäbe (2) so ausgebildet ist, daß der Querschnitt der Stäbe bis zum Scheitel der Stirnfläche abnimmt.

5. Mit Befestigungselementen ausgerüstete Kunststoff-Hohlkammerplatten gemäß Anspruch 4, dadurch gekennzeichnet, daß die Stirnfläche (4) einer kalotten- oder einer pyramidenförmigen Raumform zugehört.

6. Mit Befestigungselementen ausgerüstete Kunststoff-Hohlkammerplatten gemäß den Ansprüchen 1 bis 5, dadurch gekennzeichnet, daß eine Vielzahl von Kunststoff-Stababschnitten (2A) durch dünnere, flexible Stangeneinheiten (5) miteinander verbunden sind.

7. Mit Befestigungselementen ausgerüstete Kunststoff-Hohlkammerplatten gemäß den Ansprüchen 1 bis 6, dadurch gekennzeichnet, daß die Stangeneinheiten (5) mittig mit den Stirnflächen (4) der Stababschnitte (2A) verbunden sind.

8. Mit Befestigungselementen ausgerüstete Kunststoff-Hohlkammerplatten gemäß den Ansprüchen 1 bis 7, dadurch gekennzeichnet, daß die Kunststoff-Hohlkammerplatten aus Polycarbonat bestehen.

9. Mit Befestigungselementen ausgerüstete Kunststoff-Hohlkammerplatten gemäß den Ansprüchen 1 bis 8, dadurch gekennzeichnet, daß die Kunststoffstäbe aus Hart-PVC oder aus Polycarbonat bestehen.

10. Befestigungselemente für Kunststoff-Hohlkammerplatten, dadurch gekennzeichnet, daß sie aus einer Vielzahl von Kunststoffabschnitten (2A) bestehen, deren Querschnitt (3) dem Hohlkammerquerschnitt angepaßt ist, aber die Bewegung innerhalb der Hohlkammern (1) noch möglich ist und die untereinander durch dünnere, flexible Stabeinheiten (5) verbunden sind.

0077882

**Europäisches Patentamt**

**EUROPÄISCHER RECHERCHENBERICHT**

**0077882**

Nummer der Anmeldung

EP 82 10 6724

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| | --- | | F 16 B 5/01 |
| X | DE-A-1 918 003 (REHAU PLASTIKS GmbH) <br> * Seite 3, Zeilen 1-14; Figur 1 * | 1-3 | E 04 C 2/54 |
| | --- | | |
| A | US-A-3 401 496 (H. ZÖPNEK) <br> * Spalte 3, Zeilen 1-9; Figuren 1,2 * | 1-3 | |
| | --- | | |
| A | US-A-3 284 116 (J.A. GEORGE) <br> * Spalte 2, Zeilen 27-49; Figuren 1,2 * | 3 | |
| | --- | | |
| A | DE-A-3 010 050 (HERBERTS GmbH) <br> * Seite 10, Zeilen 31-37; Seite 11, Zeilen 1-6, 10,11; Seite 12, Zeile 17 * | 8 | |
| | ----- | | **RECHERCHIERTE SACHGEBIETE (Int. Cl. ³)** <br><br> F 16 B <br> E 04 C |

Der vorliegende Recherchenbericht wurde für alle Patentansprüche erstellt.

| Recherchenort | Abschlußdatum der Recherche | Prüfer |
|---|---|---|
| DEN HAAG | 31-01-1983 | VAN WESTENBRUGGE A. |

**KATEGORIE DER GENANNTEN DOKUMENTEN**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

................................................................

& : Mitglied der gleichen Patentfamilie, übereinstimmendes Dokument

EPA Form 1503. 03.82